(19) Europäisches Patentamt
European Patent Office
Office européen des brevets

(11) EP 4 671 322 A1

(12) # EUROPEAN PATENT APPLICATION

(43) Date of publication:
**31.12.2025 Bulletin 2026/01**

(21) Application number: **24184689.8**

(22) Date of filing: **26.06.2024**

(51) International Patent Classification (IPC):
***C08L 23/10*** *(2006.01)*

(52) Cooperative Patent Classification (CPC):
(C-Sets available)
**C08L 23/10; C08F 110/06;** C08F 210/06;
C08L 2205/24; C08L 2207/02 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Abu Dhabi Polymers Co. Ltd (Borouge) - Sole Proprietorship L.L.C.**
  **Abu Dhabi (AE)**
- **Borealis GmbH**
  **1020 Vienna (AT)**

(72) Inventors:
- **VAN CAUWENBERGHE, Hans Jozef Francois**
  **Abu Dhabi (AE)**
- **QUDAIH, Rana**
  **Abu Dhabi (AE)**
- **SOBOH, Mohammed**
  **Abu Dhabi (AE)**

(74) Representative: **Maiwald GmbH**
**Elisenhof**
**Elisenstraße 3**
**80335 München (DE)**

(54) **POLYPROPYLENE COMPOSITION WITH EXCELLENT STIFFNESS AND IMPACT STRENGTH**

(57) The present invention relates to a polypropylene composition comprising from 95.000 to 99.999 wt.-% of a heterophasic propylene copolymer (A) and from 0.0001 to 1.0000 wt.-% of a nucleating agent comprising particles comprising hydrotalcite, characterized in that the amount of talc in the polypropylene composition is less than 0.50 wt.-%, all based on the overall weight of the polypropylene composition.

EP 4 671 322 A1

(52) Cooperative Patent Classification (CPC): (Cont.)

C-Sets
**C08F 10/06, C08F 4/6465;**
**C08F 10/06, C08F 4/651;**
**C08F 10/06, C08F 4/6546;**
**C08F 210/06, C08F 2/001;**
**C08L 23/10, C08L 23/08, C08K 3/105;**
C08F 110/06, C08F 2500/12, C08F 2500/35;
C08F 210/06, C08F 210/16, C08F 2500/12,
C08F 2500/35, C08F 2500/17, C08F 2500/27,
C08F 2500/30, C08F 2500/31

## Description

The present invention relates to a polypropylene composition comprising from 95.000 to 99.999 wt.-% of a heterophasic propylene copolymer (A) and from 0.0001 to 1.0000 wt.-% of a nucleating agent comprising particles comprising hydrotalcite, characterized in that the amount of talc in the polypropylene composition is less than 0.50 wt.-%, all based on the overall weight of the polypropylene composition.

## Technical background

Heterophasic propylene copolymers are widely used for the preparation of moulded articles. Their very basic property profile is usually described by density, flowability, stiffness and impact strength. At a given density and melt flow rate, an excellent stiffness-impact balance is frequently requested, especially for more demanding applications. The balance between stiffness and impact strength is often delicate as high impact strength leads to a significant reduction of stiffness and vice versa.

In case it is desired to downgauge a product made of a polypropylene material, however, it is of high importance that both stiffness and impact strength remain on a high level.

WO 2020/053164 discloses a polypropylene composition based on a heterophasic propylene copolymer with an improved balance of properties, which includes talc as nucleating agent.

The current industry standard for incorporating talc in the production of various polymer-based products, particularly in injection moulding processes, poses significant challenges with respect to health, safety, and environmental concerns. Talc, a commonly used additive, contains asbestos, necessitating a crucial shift towards a safer and more sustainable alternative.

Thus, there is a need in the art to provide a polypropylene composition especially for injection moulding applications, which shifts away from potentially harmful additivation towards safer and more sustainable alternatives, which still meets the demands of a superior balance of properties in regard of stiffness, impact strength and processability, which allows downgauging and high performance in the production processes.

## Summary of the invention

In a first aspect the present invention relates to a polypropylene composition comprising

(A) from 95.000 to 99.999 wt.-%, preferably from 97.500 to 99.995 wt.-%, more preferably from 99.000 to 99.990 wt.-%, based on the overall weight of the polypropylene composition, of a heterophasic propylene copolymer, which has

- a xylene cold soluble (XCS) fraction content of from 10.0 to 20.0 wt.-%, preferably from 11.5 to 18.5 wt.-%, more preferably from 12.5 to 17.5 wt.-%, based on the overall weight of the heterophasic propylene copolymer (A), and
- an alpha-olefin comonomer content, preferably an ethylene content, in the XCS fraction of from 25.0 to 50.0 wt.-%, preferably from 30.0 to 45.0 wt.-%, more preferably from 32.5 to 42.5 wt.-%, based on the overall weight of the XCS phase, and

(B) from 0.0001 to 1.0000 wt.-%, preferably from 0.0005 to 0.5000 wt.-%, more preferably from 0.0010 to 0.1000 wt.-%, based on the overall weight of the polypropylene composition, of a nucleating agent comprising particles comprising hydrotalcite,

wherein the polypropylene composition has an $MFR_2$ of from 10.0 to 50.0 g/10 min, preferably from 12.5 to 40.0 g/10 min, more preferably from 15 to 30.0 g/10 min, determined according to ISO 1133 at 230°C and 2.16 kg,

characterized in that the amount of talc in the polypropylene composition is less than 0.50 wt.-%, such as in the range of from 0.00 to 0.25 wt.-%, preferably from 0.00 to 0.15 wt.-%, more preferably from 0.00 to 0.05 wt.-%, based on the overall weight of the polypropylene composition, most preferably the polypropylene composition is free of talc.

In a second aspect the present invention relates to a process for producing the polypropylene composition as described above or below comprising the steps of

a) Polymerizing in a first polymerization stage propylene monomers in the presence of a Ziegler-Natta catalyst system and obtaining first polymerization mixture comprising the Ziegler Natta catalyst system and a first propylene homopolymer component having a melt flow rate $MFR_2$ of from 50 to 100 g/10 min, preferably from 55 to 90 g/10 min, more preferably from 60 to 75 g/10 min, determined according to ISO 1133 at 2.16 kg and 230°C;
b) Transferring the first polymerization mixture from the first polymerization stage to a second polymerization stage;
c) Polymerizing in the second polymerization stage propylene monomers in the presence of the first polymerization

mixture and obtaining second polymerization mixture comprising the Ziegler Natta catalyst system, the first propylene homopolymer component and a second propylene homopolymer component having a melt flow rate $MFR_2$ of from 25 to 75 g/10 min, preferably from 30 to 60 g/10 min, more preferably from 35 to 50 g/10 min, determined according to ISO 1133 at 2.16 kg and 230°C, determined according to ISO 1133 at 2.16 kg and 230°C;
d) Transferring the second polymerization mixture from the second polymerization stage to a third polymerization stage;
e) Polymerizing in the third polymerization stage propylene monomers and alpha-olefin comonomers, preferably ethylene comonomers, in the presence of the second polymerization mixture and obtaining third polymerization mixture comprising the Ziegler Natta catalyst system, the first propylene homopolymer component, the second propylene homopolymer component, and a third propylene-alpha-olefin copolymer component, preferably a third propylene-ethylene copolymer component;
f) Removing the third polymerization mixture from the third polymerization stage and obtaining the heterophasic propylene copolymer (A);
g) Compounding the heterophasic propylene copolymer (A) with the particles comprising hydrotalcite to obtain the polypropylene composition.

In a third aspect the present invention relates to an article comprising the polypropylene composition as described above or below, preferably in an amount of from 90 to 100 wt.-%, more preferably from 95 to 100 wt.-%, based on the overall weight of the article.
In a fourth aspect the present invention relates to the use of the polypropylene composition as described above or below for the production of an article, preferably an injection moulded article, with an amount of talc of less than 0.50 wt.-%, such as in the range of from 0.00 to 0.25 wt.-%, preferably from 0.00 to 0.15 wt.-%, more preferably from 0.00 to 0.10 wt.-%, based on the overall weight of the article, more preferably a talc-free article, preferably a talc-free injection moulded article.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.
Unless clearly indicated otherwise, use of the terms "a," "an," and the like refers to one or more.
In the following, amounts are given in % by weight (wt.-%) unless it is stated otherwise.
A propylene homopolymer is a polymer that essentially consists of propylene monomer units. Due to impurities especially during commercial polymerization processes, a propylene homopolymer can comprise up to 0.1 mol% comonomer units, preferably up to 0.05 mol% comonomer units and most preferably up to 0.01 mol% comonomer units.
A propylene copolymer is a copolymer of propylene monomer units and comonomer units, preferably selected from ethylene and $C_4$-$C_8$ alpha-olefins. A propylene random copolymer is a propylene copolymer wherein the comonomer units are randomly distributed along the polymer chain, whilst a propylene block copolymer comprises blocks of propylene monomer units and blocks of comonomer units. Propylene random copolymers can comprise comonomer units from one or more comonomers different in their amounts of carbon atoms.
The heterophasic propylene copolymers typically comprise:

a) a crystalline propylene homopolymer or copolymer matrix (M); and
b) an elastomeric rubber, preferably a propylene-ethylene copolymer (E);

A polypropylene means a polymer being composed of units derived from propylene in an amount of more than 50 mol-%.
The present invention will now be described in more detail.

## Detailed Description

### Polypropylene composition

In a first aspect the present invention relates to a polypropylene composition comprising

(A) from 95.000 to 99.999 wt.-%, preferably from 97.500 to 99.995 wt.-%, more preferably from 99.000 to 99.990 wt.-%, based on the overall weight of the polypropylene composition, of a heterophasic propylene copolymer, which has

- a xylene cold soluble (XCS) fraction content of from 10.0 to 20.0 wt.-%, preferably from 11.5 to 18.5 wt.-%, more preferably from 12.5 to 17.5 wt.-%, based on the overall weight of the heterophasic propylene copolymer (A), and
- an alpha-olefin comonomer content, preferably an ethylene content, in the XCS fraction of from 25.0 to 50.0 wt.-%, preferably from 30.0 to 45.0 wt.-%, more preferably from 32.5 to 42.5 wt.-%, based on the overall weight of the XCS phase, and

(B) from 0.0001 to 1.0000 wt.-%, preferably from 0.0005 to 0.5000 wt.-%, more preferably from 0.0010 to 0.1000 wt.-%, based on the overall weight of the polypropylene composition, of a nucleating agent comprising particles comprising hydrotalcite, wherein the polypropylene composition has an $MFR_2$ of from 10.0 to 50.0 g/10 min, preferably from 12.5 to 40.0 g/10 min, more preferably from 15 to 30.0 g/10 min, determined according to ISO 1133 at 230°C and 2.16 kg,

characterized in that the amount of talc in the polypropylene composition is less than 0.50 wt.-%, such as in the range of from 0.00 to 0.25 wt.-%, preferably from 0.00 to 0.15 wt.-%, more preferably from 0.00 to 0.05 wt.-%, based on the overall weight of the polypropylene composition, most preferably the polypropylene composition is free of talc.

The polypropylene composition comprises the heterophasic propylene copolymer (A) in an amount of from 95.000 to 99.999 wt.-%, preferably from 97.500 to 99.995 wt.-%, more preferably from 99.000 to 99.990 wt.-% and the nucleating agent (B) in an amount of from 0.0001 to 1.0000 wt.-%, preferably from 0.0005 to 0.5000 wt.-%, more preferably from 0.0010 to 0.1000 wt.-%, all based on the overall weight of the polypropylene composition.

The polypropylene composition can further comprise polymeric components, which are different from the heterophasic propylene copolymer (A), in an amount of preferably 0.0 to 5.0 wt% based on the total weight of the polypropylene composition.

In a preferred embodiment the polymeric components of the polypropylene composition consist of the heterophasic propylene copolymer (A).

It is especially preferred that the polypropylene composition does not comprise a polyethylene component, such as a low density polyethylene component.

Besides these polymeric components the polypropylene composition can comprise one or more additives in an amount of from 0.0 up to 5.0 wt%, based on the total weight of the polypropylene composition. The one or more additives are preferably selected from acid scavengers, antioxidants, etc. Such additives are commercially available and for example described in "Plastic Additives Handbook", 6th edition 2009 of Hans Zweifel (pages 1141 to 1190).

Usually, these additives are added in quantities of 1 to 50000 ppm for each single component.

The one or more additives can be added to the polymeric components in a blending step.

Thereby, the one or more additives can be added to the polymeric components in form of master batches in which one or more additives are blended with a carrier polymer in concentrated amounts. Any optional carrier polymer is calculated to the amount of additives, based on the total amount of the propylene copolymer composition.

The amount of talc in the polypropylene composition is less than 0.50 wt.-%, such as in the range of from 0.00 to 0.25 wt.-%, preferably from 0.00 to 0.15 wt.-%, more preferably from 0.00 to 0.05 wt.-%, based on the overall weight of the polypropylene composition.

It is especially preferred that the polypropylene composition is free of talc, i.e. does not comprise talc in a detectable amount.

Preferably, the polypropylene composition comprises from 0.050 to 0.300 wt.-%, preferably from 0.100 to 0.275 wt.-%, more preferably from 0.150 to 0.250 wt.-%, based on the overall weight of the polypropylene composition of an acid scavenger (C).

The acid scavenger preferably comprises glycerol monostearate.

It is preferred that the polypropylene composition does not comprise calcium stearate.

The polypropylene composition preferably comprises, more preferably consists of the heterophasic propylene copolymer (A), the nucleating agent (B), optionally the acid scavenger (C) and optionally other additives, such as antioxidants.

It is thereby preferred that the polypropylene composition does not comprise calcium stearate and that the amount of talc is less than 0.50 wt.-%, more preferably that the polypropylene composition is free of talc.

It has been found that the polypropylene composition according to the invention shows a superior balance of properties in regard of processability, stiffness and impact strength thereby avoiding potentially harmful components such as talc.

The polypropylene composition has an $MFR_2$ of from 10.0 to 50.0 g/10 min, preferably from 12.5 to 40.0 g/10 min, more preferably from 15.0 to 30.0 g/10 min, determined according to ISO 1133 at 230°C and 2.16 kg.

Further, the polypropylene composition preferably has a flexural modulus of from 1400 to 1800 MPa, more preferably from 1450 to 1750 MPa, still more preferably from 1500 to 1700 MPa, determined according to ISO 178 on injection molded specimens of 80 × 10 × 4 mm prepared in accordance with ISO 294-1:1996.

Still further, the polypropylene composition preferably has a Charpy notched impact strength at 23°C of from 7.0 to 15.0 kJ/m$^2$, more preferably from 7.5 to 12.5 kJ/m$^2$, still more preferably from 8.0 to 11.0 kJ/m$^2$, determined according to to ISO 179-1 eA at +23 °C on injection moulded specimens of 80 × 10 × 4 mm prepared according to EN ISO 1873-2.
Furthermore, the polypropylene composition preferably has a Charpy notched impact strength at -20°C of from 4.5 to 10.0 kJ/m$^2$, more preferably from 4.8 to 8.5 kJ/m$^2$, still more preferably from 5.0 to 7.5 kJ/m$^2$, determined according to to ISO 179-1 eA at -20 °C on injection moulded specimens of 80 × 10 × 4 mm prepared according to EN ISO 1873-2.
The improved balance of properties allows for applications in injection moulding, especially for the production of thin-walled injection moulded parts at high performance in the production processes.
Preferably, the polypropylene composition is prepared by melt blending the heterophasic propylene copolymer (A) and the nucleating agent (B), the optional further additives, all as described above or below.
In the following, the copolymer of heterophasic propylene copolymer (A) and the nucleating agent (B) are described in more detail.

**Heterophasic propylene copolymer (A)**

The polypropylene composition as described above or below preferably comprises a heterophasic propylene copolymer (A).
The heterophasic propylene copolymer (A) is preferably present in the polypropylene composition in an amount of from 95.000 to 99.999 wt.-%, preferably from 97.500 to 99.995 wt.-%, more preferably from 99.000 to 99.990 wt.-%, based on the overall weight of the polypropylene composition.
The heterophasic propylene copolymer (A) usually has a matrix phase and an elastomeric phase dispersed in said matrix phase.
The matrix phase is preferably a propylene homopolymer.
The matrix phase is preferably multimodal, more preferably bimodal.
Accordingly, the matrix phase preferably comprises at least two fractions, like two or three, preferably two fractions, which differ in their molecular weight. The difference in molecular weight thereby can be determined by differences in their melt flow rates $MFR_2$.
The two or more fractions of the matrix phase are preferably propylene homopolymer fractions.
A first fraction, preferably a first propylene homopolymer fraction, of the matrix phase preferably has a melt flow rate $MFR_2$ of from 50 to 100 g/10 min, preferably from 55 to 90 g/10 min, more preferably from 60 to 75 g/10 min, determined according to ISO 1133 at 2.16 kg and 230°C.
A second fraction, preferably a second propylene homopolymer fraction, of the matrix phase preferably has a melt flow rate $MFR_2$ of from 5.0 to 25.0 g/10 min, more preferably in the range of 7.0 to 21.0 g/10 min, still more preferably in the range of 8.0 to 19.0 g/10 min, determined according to ISO 1133 at 2.16 kg and 230°C.
The first fraction thereby usually has a higher $MFR_2$ compared to the second fraction. The melt flow rates of the first fraction and the second fraction preferably fulfil in-equation (I), more preferably in-equation (Ia), still more preferably in-equation (Ib),

$$\frac{MFR(high)}{MFR(low)} \geq 2.0 \qquad \text{(I)},$$

$$8.0 \geq \frac{MFR(high)}{MFR(low)} \geq 2.3 \qquad \text{(Ia)},$$

$$6.2 \geq \frac{MFR(high)}{MFR(low)} \geq 2.5 \qquad \text{(Ib)},$$

wherein

MFR (high) is the melt flow rate $MFR_2$ (230 °C / 2.16 kg) determined according to ISO 1133 in [g/10 min] of the first fraction and
MFR (low) is the melt flow rate $MFR_2$ (230 °C / 2.16 kg) determined according to ISO 1133 in [g/10 min] of the second fraction.

The weight ratio of the first fraction to the second fraction is preferably in the range of from 20:80 to 80:20, more preferably 75:25 to 25:75, still more preferably 55:45 to 45:55.
The matrix phase is preferably present in the heterophasic propylene copolymer (A) in an amount of from 80.0 to 90.0 wt.-%, more preferably from 81.5 to 87.5 wt.-%, still more preferably 82.5 to 86.0 wt.-%, based on the overall weight of

the heterophasic propylene copolymer (A)

Additionally, the heterophasic propylene copolymer (A) preferably comprises the elastomeric phase in an amount of from 10.0 to 20.0 wt.-%, preferably from 12.5 to 18.5 wt.-%, more preferably from 14.0 to 17.5 wt.-%, based on the overall weight of the heterophasic propylene copolymer (A).

The elastomeric phase usually is a rubber component composed of a block copolymer of propylene and comonomer units, such as ethylene and alpha-olefins having from 4 to 8 carbon atoms such as an ethylene-propylene copolymer rubber (EPR) component.

The heterophasic propylene copolymer (A) preferably comprises comonomer units selected from ethylene and alpha-olefins having from 4 to 8 carbon atoms, such as from ethylene, 1-butene, 1-hexene and/or 1-octene. It is preferred that the comonomer units are only ethylene.

It is especially preferred that the heterophasic propylene copolymer (A) is a heterophasic copolymer of propylene and ethylene.

The heterophasic propylene copolymer preferably has a total comonomer content, preferably total ethylene content of from 5.0 to 10.0 wt.-%, preferably from 5.3 to 9.0 wt.-%, more preferably from 5.5 to 8.0 wt.-%, based on the overall weight of the heterophasic propylene copolymer (A), determined by quantitative $^{13}C\{^{1}H\}$ NMR spectroscopy.

In a heterophasic propylene copolymer the matrix phase and the elastomeric phase usually cannot exactly be divided from each other. In order to characterize the matrix phase and the elastomeric phase of a heterophasic propylene copolymer several methods are known. One method is the extraction of xylene cold solubles. The fraction which is soluble xylene at 25°C (xylene cold solubles (XCS) fraction) is mainly composed of the elastomeric phase. The part which remains insoluble is the xylene cold insoluble (XCI) fraction and is mainly composed of the matrix phase.

The heterophasic propylene copolymer has a xylene cold soluble (XCS) fraction content of from 10.0 to 20.0 wt.-%, preferably from 12.5 to 18.5 wt.-%, more preferably from 14.0 to 17.5 wt.-%, based on the overall weight of the heterophasic propylene copolymer (A).

The xylene cold soluble (XCS) fraction has a comonomer content, preferably an ethylene content, of from 25.0 to 50.0 wt.-%, preferably from 30.0 to 45.0 wt.-%, more preferably from 32.5 to 42.5 wt.-%, based on the overall weight of the XCS fraction, determined by quantitative $^{13}C\{^{1}H\}$ NMR spectroscopy.

Further, the xylene cold soluble (XCS) fraction preferably has an intrinsic viscosity IV of from 2.50 to 4.00 dl/g, preferably from 2.75 to 3.75 dl/g, more preferably from 3.00 to 3.50 dl/g, determined according to DIN ISO 1628/1, October 1999 in decalin at 135°C.

The heterophasic propylene copolymer (A) preferably has a content of the fraction insoluble in cold xylene (XCI) of from 80.0 to 90.0 wt.-%, more preferably from 81.5 to 87.5 wt.-%, still more preferably 82.5 to 86.0 wt.-%, based on the overall weight of the heterophasic propylene copolymer (A).

The XCS fraction and the XCI fraction usually make up 100 wt.-% of the heterophasic propylene copolymer (A).

Preferably the heterophasic propylene copolymer (A) has a melting temperature of at least 160 °C, more preferably in the range of 162 to 170 °C, still more preferably in the range of 163 to 168 °C, determined by DSC measurement.

The heterophasic propylene copolymer (A)can be produced by blending the fraction(s) of the matrix phase and the elastomeric phase. However, it is preferred that the heterophasic propylene copolymer (A) is produced in a sequential step process, using reactors in serial configuration and operating at different reaction conditions. As a consequence, each fraction prepared in a specific reactor may have its own molecular weight distribution and/or comonomer content distribution.

The heterophasic propylene copolymer (A) is preferably produced in a sequential polymerization process, i.e. in a multistage process, known in the art, wherein the fraction(s) of the matrix phase is/are produced at least in one slurry reactor, preferably in a slurry reactor and optionally in a subsequent gas phase reactor, and subsequently the elastomeric phase is produced at least in one, i.e. one or two, gas phase reactor(s).

A suitable polymerization process for producing the heterophasic propylene copolymer (A) is described below in the second aspect of the invention.

**Nucleating agent (B)**

The polypropylene composition as described above or below preferably comprises a nucleating agent (B).

The nucleating agent (B)is preferably present in the polypropylene composition in an amount of from 0.0001 to 1.0000 wt.-%, preferably from 0.0005 to 0.5000 wt.-%, more preferably from 0.0010 to 0.1000 wt.-%, based on the overall weight of the polypropylene composition.

The nucleating agent (B) comprises particles comprising hydrotalcite.

The particles are preferably multi-layered particles, which comprise at least one layer, such as one or two layers, preferably one layer comprising, more preferably consisting of hydrotalcite.

It is preferred that at least one inner layer, preferably one inner layer of the multi-layered particles comprises,

more preferably consists of hydrotalcite.

Hydrotalcite is a layered double hydroxide of the general chemical formula $[[[M_1^{2+}]_y[M_2^{2+}]_{1-x[}M_3^{3+}]_x(OH)_2](A^{n-})_{x/n}\cdot mH_2O$

wherein

$M_1$ and $M_2$ are independently a divalent metal selected from the group of Mg, Zn, Ca, Sr, Cu, Fe, Mn, Co, Ni, Sn, Pb, Cd, and Ba, preferably Mg, Zn, Cu, Fe, Mn, Co, Ni, and Cd; M3 is trivalent methal such as Al and/or Fe, preferably Al; and

An- is one or more of an interclating n-valent anion,

wherein m, x, y, and z are values in the ranges represented by

$$0 \leq m < 2$$

$$0 < x \leq 0.5$$

$$0.5 \leq y+z \leq 1.$$

It is preferred that the hydrotalcite is a Mg-Al hydrotalcite, such as an magnesium aluminium hydroxide carbonate hydrate.

The hydrotalcite can be of mineral origin.

It is, however, preferred that the hydrotalcite is of synthetic origin.

The multi-layered particles preferably further comprise at least one layer, preferably an outer layer, comprising, more preferably consisting of an organic acid derivative or salts thereof.

The organic acid derivative or salts thereof is preferably selected from di-carboxy-$C_{1-12}$ alkyl, bis $C_{1-12}$ alkyl phosphonate, N-substituted isocyanurate, mono-, di- or tri-carboxy-$C_{3-8}$ cycloalkane, and organic acid according to formula (I)

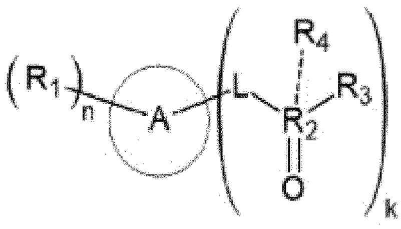

(I)

wherein

k is an integer from 1 to 3;
n is an integer from 0 to 5;
A represents a cycloalkyl, aryl or heteroaryl;
L represents a direct bond or NH;
$R_1$ is one or more independently selected from hydroxyl, carboxyl, $C_{1-6}$ alkoxycarbonyl, arylcarbonylamino, amino, amide, $C_{1-6}$ alkyl, hydroxyphosphoryl, Het, or Ar;
Ar represents an aryl;
Het represents heterocycle;
$R_2$ represents C or P or S;
wherein $R_3$ is hydroxyl and present when L represents a direct bond, or wherein $R_3$ is hydroxyl or $C_{1-6}$ alkyl, when L represents NH; and
wherein $R_4$ is hydroxyl or $C_{1-6}$ alkylcarbonyl and present when $R_2$ represents P, or
wherein $R_4$ is a double bonded oxygen and present when $R_2$ represents S.

Suitable organic acid derivative or salts thereof are e.g. selected from group of bicyclo[2.2.1]heptane-2,3-dicarboxylic acid, *cis*-1,2-cyclohexanedicarboxylic acid, (1R, 2S)-2-methoxycarbonyl cyclohexane carboxylic acid, 1,3,5-tris(2,2-dimethylpropionylamino)benzene, 2,6-naphthalene dicarboxylic acid, benzoic acid, pimelic acid, phenylphosphonic acid, 2,6-dihydroxypyrimidine-4-carboxylic acid, 4-pyridinecarboxylic acid, benzene-1,3,5-tricarboxylic acid, 4-(benzoylamino)benzoic acid, disodiurn malonate, sodium acetate, 1-octanesulfonic acid, 2,3-pyridinedicarboxylic acid,

2-carboxyethyl (phenyl) phosphinic acid, 2-naphthalenecarboxylic acid, 2-tert-butylbenzoic acid, 4-amino benzoic acid, 4-biphenyl carboxylic acid, 4-toluenesulfonic acid, bis(2-ethylhexyl)hydrogen phosphate, butylphosphonic acid, 4-phthalimidobenzoic acid, 4-tert-butylbenzoic acid, 1,3,5-triazine-2,4,6-triol, 1,4-cyclohexanedicarboxylic acid, 4-propyl cyclohexane carboxylic acid, and mixtures thereof.

Preferably, the organic acid derivative or salts thereof may be one or more selected from the group of benzoic acid, *cis*-1,2-cyclohexanedicarboxylic acid, 2,6-naphthalene dicarboxylic acid, bicyclo[2.2.1]heptane-2,3-dicarboxylic acid (2.3-norbomanedicarboxylic acid), pimelic acid, phenylphosphonic acid, benzene-1,3,5-tricarboxylic acid, 1,3,5-triazine-2,4,6-triol, 4-amino benzoic acid, 1,4-cyclohexane dicarboxylic acid, 2-carboxyethyl (phenyl) phosphinic acid, 4-propyl cyclohexane carboxylic acid, butylphosphonic acid, 4-toluenesulfonic acid, and mixtures thereof.

The organic acid derivative or salts thereof is more preferably selected from the group of bicyclo[2.2.1] heptane-2,3-dicarboxylic acid, *cis*-1,2-cyclohexanedicarboxylic acid, pimelic acid, phenylphosphonic acid, 2,6-naphthalene dicarboxylic acid and mixtures thereof.

The particles comprising hydrotalcite preferably have one or more or all of the following properties:

- a molar ratio of MgO to $Al_2O_3$ of from 2.5 to 7.5, preferably from 3.0 to 6.5, more preferably from 3.3 to 5.0;
- a specific surface area of from 10 to 30 $m^2/g$, preferably from 12 to 28 $m^2/g$, more preferably from 15 to 25 $m^2/g$;
- an average secondary particle size of from 0.1 to 1.0 μm, preferably from 0.2 to 0.9 μm, more preferably from 0.3 to 0.8 μm.

These properties can be determined by any suitable measurement method. For commercial products these properties are usually disclosed by the supplier, e.g. in technical documentation.

Suitable particles comprising hydrotalcite are commercially available e.g. as Setogem RD from Kisuma Chemicals BV.

In addition to the particles comprising hydrotalcite, the nucleating agent (B) can further comprise an alpha-nucleating agent.

Preferably, the alpha-nucleating agent is selected from soluble alpha-nucleating agents and polymeric alpha-nucleating agents.

The alpha-nucleating agent is preferably selected from the group consisting of

(i) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3-trideoxy-4,6:5,7-bis-O-[(4-propylphenyl)methylene]-nonitol, and
(ii) vinylcycloalkane polymer and vinylalkane polymer (as discussed in more detail below), and
(iii) mixtures thereof.

The alpha-nucleating agent is preferably selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3-trideoxy-4,6:5,7-bis-O-[(4-propylphenyl) methylene]-nonitol, vinylcycloalkane polymer, vinylalkane polymer, and mixtures thereof.

Especially preferred are vinylcycloalkane polymers such as e.g. vinylcyclohexane (VCH) polymers. Such polymers can be added e.g. using Borealis Nucleation Technology (BNT).

The alpha-nucleating agent can be added to the polyolefin composition as an isolated raw material or in a mixture with a carrier polymer, i.e. in a so-called master batch. The amount of the carrier polymer of the master batch thereby is calculated to the amount of the alpha-nucleating agent.

Polymeric alpha-nucleating agents like vinylcycloalkane polymers such as e.g. vinylcyclohexane (VCH) polymers can also be added by polymerizing a vinyl compound in the presence of the catalyst system upon polymerization of the heterophasic propylene copolymer as described below in the second aspect of the invention.

It is preferred that the particles comprising hydrotalcite are present in the polypropylene composition in an amount of from 0.0001 to 0.5000 wt.-%, preferably from 0.0005 to 0.2500 wt.-%, more preferably from 0.0010 to 0.1000 wt.-%, based on the overall weight of the polypropylene composition.

It is further preferred that the alpha-nucleating agent is present in the polypropylene composition in an amount of from 0.00 to 0.50 wt.-%, preferably from 0.0001 to 0.2500 wt.-%, more preferably from 0.0005 to 0.1000 wt.-%, based on the overall weight of the polypropylene composition.

The nucleating agent (B) can further comprise minor amounts of talc.

It is, however preferred that the nucleating agent (B) is free of talc.

The amount of talc in the polypropylene composition is less than 0.50 wt.-%, such as in the range of from 0.00 to 0.25 wt.-%, preferably from 0.00 to 0.15 wt.-%, more preferably from 0.00 to 0.05 wt.-%, based on the overall weight of the

polypropylene composition. In one preferred embodiment the polypropylene composition is free of talc.

If present, the polypropylene composition preferably comprises talc in an amount of from 0.001 to less than 0.50 wt.-%, preferably 0.005 to 0.25 wt.-%, more preferably 0.01 to 0.15 wt.-%, more preferably 0.01 to 0.05 wt.-%, based on the overall weight of the polypropylene composition.

It has been found that the polypropylene composition comprising the nucleating agent (B) can avoid potentially harmful components such as talc and still show a superior balance of properties in regard of processability, stillness and impact strength so that a polypropylene composition suitable for injection moulding with higher sustainability can be obtained which meets health and safety compliance regulations.

## Process

In a second aspect the present invention relates to a process for producing the polypropylene composition as described above or below.

Thereby, the heterophasic propylene copolymer (A) can be polymerized in a sequential multistage polymerization process, i.e. in a polymerization process in which two or more polymerization reactors are connected in series. Preferably, in the sequential multistage polymerization process, two or more, more preferably three or more, such as three or four, polymerization reactors are connected in series. The term "polymerization reactor" shall indicate that the main polymerization takes place. Thus in case the process consists of three polymerization reactors, this definition does not exclude the option that the overall process comprises for instance a pre-polymerization step in a pre-polymerization reactor.

The matrix phase of the heterophasic propylene copolymer (A) is usually polymerized in first polymerization reactor for producing a unimodal matrix phase or in the first and second polymerization reactor for producing a multimodal matrix phase.

The elastomeric phase of the heterophasic propylene copolymer (A) is preferably polymerized in the subsequent one or two, preferably one polymerization reactor(s) in the presence of the matrix phase for producing a unimodal elastomeric phase or a multimodal elastomeric phase, preferably a unimodal elastomeric phase.

Preferably, the polymerization reactors are selected from slurry phase reactors, such as loop reactors and/or gas phase reactors such as fluidized bed reactors, more preferably from loop reactors and fluidized bed reactors.

A preferred sequential multistage polymerization process is a "loop-gas phase"-process, such as developed by Borealis A/S, Denmark (known as BORSTAR® technology) described e.g. in patent literature, such as in EP 0 887 379, WO 92/12182

WO 2004/000899, WO 2004/111095, WO 99/24478, WO 99/24479 or in WO 00/68315.

A further suitable slurry-gas phase process is the Spheripol® process of LyondellBasell.

The polymerization process for polymerizing the heterophasic propylene copolymer preferably comprises the steps of

a) Polymerizing in a first polymerization stage propylene monomers in the presence of a Ziegler-Natta catalyst system and obtaining first polymerization mixture comprising the Ziegler Natta catalyst system and a first propylene homopolymer component having a melt flow rate $MFR_2$ of from 50 to 100 g/10 min, preferably from 55 to 90 g/10 min, more preferably from 60 to 75 g/10 min, determined according to ISO 1133 at 2.16 kg and 230°C;

b) Transferring the first polymerization mixture from the first polymerization stage to a second polymerization stage;

c) Polymerizing in the second polymerization stage propylene monomers in the presence of the first polymerization mixture and obtaining second polymerization mixture comprising the Ziegler Natta catalyst system, the first propylene homopolymer component and a second propylene homopolymer component, which has a melt flow rate $MFR_2$ of from 25 to 75 g/10 min, preferably from 30 to 60 g/10 min, more preferably from 35 to 50 g/10 min, determined according to ISO 1133 at 2.16 kg and 230°C;

d) Transferring the second polymerization mixture from the second polymerization stage to a third polymerization stage;

e) Polymerizing in the third polymerization stage propylene monomers and alpha-olefin comonomers, preferably ethylene comonomers, in the presence of the second polymerization mixture and obtaining third polymerization mixture comprising the Ziegler Natta catalyst system, the first propylene homopolymer component, the second propylene homopolymer component, and a third propylene-alpha-olefin copolymer component, preferably a third propylene-ethylene copolymer component;

f) Removing the third polymerization mixture from the third polymerization stage and obtaining the heterophasic propylene copolymer (A).

The first polymerization stage is preferably conducted in a first polymerization reactor. The first polymerization reactor is preferably a slurry reactor, such as a loop reactor. The polymerization conditions in the first polymerization

reactor are may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se so that a melt flow rate of from 50 to 100 g/10 min, preferably from 55 to 90 g/10 min, more preferably from 60 to 75 g/10 min, determined according to ISO 1133 at 2.16 kg and 230°C is obtained.

It is preferred that in the first polymerization stage a propylene homopolymer is polymerized.
Consequently as monomer only propylene are introduced into the first polymerization stage.
Subsequently, the reaction mixture from step (a) is transferred to the second polymerization stage, preferably in a second polymerization reactor, i.e. to step (c).
The second polymerization reactor is preferably a gas phase reactor
The polymerization conditions in the second polymerization reactor are may be as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se so that the second propylene homopolymer component has a melt flow rate $MFR_2$ of from 25 to 75 g/10 min, preferably from 30 to 60 g/10 min, more preferably from 35 to 50 g/10 min, determined according to ISO 1133 at 2.16 kg and 230°C.

It is preferred that in the second polymerization stage a propylene homopolymer is polymerized.
Consequently as monomer only propylene are introduced into the second polymerization stage.
Subsequently, the reaction mixture from step (C) is transferred to the third polymerization stage, preferably in a third polymerization reactor, i.e. to step (c).
The third polymerization reactor is preferably a gas phase reactor
The polymerization conditions in the third polymerization reactor are may be as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se so that the combined first propylene homopolymer component, second propylene homopolymer component and third propylene copolymer component have a melt flow rate $MFR_2$ of from 10.0 to 50.0 g/10 min, preferably from 12.5 to 40.0 g/10 min, more preferably from 15 to 30.0 g/10 min, determined according to ISO 1133 at 230°C and 2.16 kg.

It is preferred that in the third polymerization stage a propylene copolymer is polymerized.
Consequently in addition to propylene comonomer(s) preferably selected from ethylene and alpha-olefins having from 4 to 8 carbon atoms, are introduced into the third polymerization stage.
It is preferred that propylene and ethylene are introduced into the third polymerization stage.
The molar ratio of comonomer units to propylene units, preferably ethylene units to propylene units is preferably in the range of from 400 to 650 mol/kmol, more preferably from 475 to 550 mol/kmol.
The residence time can vary in the three polymerization stages.
Preferably the residence time in the first polymerization stage is in the range 0.1 to 2.5 hours, e.g. 0.15 to 1.5 hours and the residence time in the gas phase reactors independently will generally be 0.2 to 6.0 hours, like 0.5 to 4.0 hours.
If desired, the polymerization may be effected in a known manner under supercritical conditions in the first polymerization reactor, i.e. in the slurry reactor, like in the loop reactor, and/or as a condensed mode in the gas phase reactors.
Preferably the process comprises also a prepolymerization with the catalyst system, as described in detail below, comprising a Ziegler-Natta procatalyst, an external donor and optionally a cocatalyst.
In a preferred embodiment, the prepolymerization is conducted as bulk slurry polymerization in liquid propylene, i.e. the liquid phase mainly comprises propylene, with minor amount of other reactants and optionally inert components dissolved therein.
The prepolymerization reaction is typically conducted at a temperature of 10 to 60 °C, preferably from 15 to 50 °C, and more preferably from 20 to 45 °C.
The pressure in the prepolymerization reactor is not critical but must be sufficiently high to maintain the reaction mixture in liquid phase. Thus, the pressure may be from 20 to 100 bar, for example 30 to 70 bar.
The catalyst components are preferably all introduced to the prepolymerization step. However, where the solid

catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

The heterophasic propylene copolymer (A) can be polymerized in the presence of a Ziegler-Natta catalyst system.

The Ziegler-Natta catalyst system preferably comprises as component (i) a Ziegler-Natta procatalyst which contains a trans-esterification product of a lower alcohol and a phthalic ester.

The procatalyst used according to the invention for preparing the heterophasic composition (HECO) is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

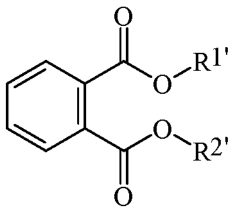
(I)

wherein $R^{1'}$ and $R^{2'}$ are independently at least a $C_5$ alkyl under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications

WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanized carrier, followed by the steps of

- adding to said titanised carrier

  (i) a dialkylphthalate of formula (I) with $R^{1'}$ and $R^{2'}$ being independently at least a Cs-alkyl, like at least a $C_8$-alkyl, or preferably
  (ii) a dialkylphthalate of formula (I) with $R^{1'}$ and $R^{2'}$ being the same and being at least a Cs-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

  to form a first product,
- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

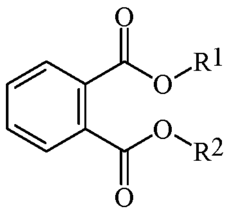

(II)

with $R^1$ and $R^2$ being methyl or ethyl, preferably ethyl,
the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the catalyst as described in the example section; especially with the use of dioctylphthalate as dialkylphthalate of formula (I).

For the production of the heterophasic composition (HECO) according to the invention the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (IIIa) or (IIIb). Formula (IIIa) is defined by

$$Si(OCH_3)_2R_2^5 \qquad (IIIa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, isobutyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)_3(NR^xR^y) \qquad (IIIb)$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, isobutyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor is of formula (IIIa), like dicyclopentyl dimethoxy silane $[Si(OCH_3)_2(cyclopentyl)_2]$, diisopropyl dimethoxy silane $[Si(OCH_3)_2(CH(CH_3)_2)_2]$.

Most preferably the external donor is dicyclopentyl dimethoxy silane $[Si(OCH_3)_2(cyclopentyl)_2]$ (Donor D).

In a further embodiment, the Ziegler-Natta procatalyst can be modified by polymerising a vinyl compound in the

presence of the catalyst system, comprising the special Ziegler-Natta procatalyst (component (i)), an external donor (component (iii) and optionally a cocatalyst (component (iii)), which vinyl compound has the formula:

$$CH_2=CH\text{-}CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the heterophasic propylene copolymer (A). The polymerized vinyl compound can act as an alpha-nucleating agent.

It is particularly preferred that the polymerized vinyl compound is the polymeric alpha-nucleating agent.

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

The polypropylene composition is obtained by compounding the heterophasic propylene copolymer (A) obtained from step f) with the particles comprising hydrotalcite and the optional further components all as described above and below in an extruder, preferably a twin-screw extruder under usual conditions as known in the art.

It is preferred that all aspects and embodiments of the polypropylene composition also apply on the process of the second aspect of the invention.

**Article**

In a third aspect the present invention relates to an article comprising the polypropylene composition as described above or below, preferably in an amount of from 90 to 100 wt.-%, more preferably from 95 to 100 wt.-%, based on the overall weight of the article.

The article is preferably an injection moulded article, more preferably a thin-walled injection moulded article.

Examples are parts of car seats, strollers, baby walkers, toys, heavy duty pails or transport packagings, such as pallets and the like.

Especially preferred are pallets and pails.

It is preferred that all aspects and embodiments of the polypropylene composition and its production process also apply on the article of the third aspect of the invention.

**Use**

In a fourth aspect the present invention relates to the use of the polypropylene composition as described above or below for the production of an article, preferably an injection moulded article, with an amount of talc of less than 0.50 wt.-%, such as in the range of from 0.00 to 0.25 wt.-%, preferably from 0.00 to 0.15 wt.-%, more preferably from 0.00 to 0.10 wt.-%, based on the overall weight of the article, more preferably a talc-free article, preferably a talc-free injection moulded article.

It is preferred that all aspects and embodiments of the polypropylene composition and its production process as well as the article also apply on the use of the fourth aspect of the invention.

The present invention will now be described in further detail by the examples provided below.

## Examples

### 1. Measuring methods

The following definitions of terms and determination methods apply for the above general description of the invention as well as to the below examples unless otherwise defined.

**$MFR_2$ (230 °C)** was measured according to ISO 1133 (230 °C, 2.16 kg load).

**$MFR_5$ (190 °C)** was measured according to ISO 1133 (190 °C, 5.0 kg load). **Calculation** of melt flow rate $MFR_2$ (230 °C) of the second polypropylene fraction (PP1b), i.e. the polymer fraction produced in the second reactor (R2), of the heterophasic propylene copolymer (HECO):

$$MFR(PP1b) = 10^{\left[\frac{\log(MFR(PP\ \ )) - w(PP1a)\ x\ \log(MFR(PP1\ \ ))}{w(PP1b)}\right]}$$

wherein

w(PP1a) is the weight fraction [in wt.-%] of the first propylene polymer fraction, i.e. the polymer produced in the

first reactor (R1),

w(PP1b) is the weight fraction [in wt.-%] of the first second propylene polymer fraction, i.e. the polymer produced in the second reactor (R2),

MFR(PP1a) is the melt flow rate $MFR_2$ (230 °C) [in g/10min] of the first propylene polymer fraction, i.e. the polymer produced in the first reactor (R1),

MFR(PP1) is the melt flow rate $MFR_2$ (230 °C) [in g/10min] of the first and second propylene polymer fractions, i.e. the polymer produced in the first and second reactor (R1 + R2),

MFR(PP1b) is the calculated melt flow rate $MFR_2$ (230 °C) [in g/10min] of the second propylene polymer fraction, i.e. the polymer produced in the second reactor (R2).

**Quantification of microstructure by NMR spectroscopy**

Quantitative nuclear-magnetic resonance (NMR) spectroscopy was used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

[mmmm] % = 100 * ( mmmm / sum of all pentads)

The presence of 2,1 erythro regio defects was indicated by the presence of the two methyl sites at 17.7 and 17.2 ppm and confirmed by other characteristic sites. Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = ( I_{e6} + I_{e8} ) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * ( P_{21e} / P_{total} )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Intrinsic viscosity** was measured according to DIN ISO 1628/1, October 1999 (in Decalin at 135 °C).

**Density** was measured according to ISO 1183-187. Sample preparation is done by compression moulding in accordance with ISO 1872-2:2007.

**The xylene solubles (XCS, wt.-%):** Content of xylene cold solubles (XCS) fraction was determined at 25 °C according ISO 16152; first edition; 2005-07-01. The part which remains insoluble is the xylene cold insoluble (XCI) fraction.

**Flexural Modulus:** The flexural modulus was determined in 3-point-bending according to ISO 178 on injection molded specimens of 80 × 10 × 4 mm prepared in accordance with ISO 294-1:1996.

**The impact strength** was determined as Charpy Notched Impact Strength according to ISO 179-1 eA at +23 °C and at -20 °C on injection moulded specimens of 80 × 10 × 4 mm prepared according to EN ISO 1873-2.

**2. Examples**

## A. Preparation of the heterophasic propylene copolymers

### Preparation of the catalyst

First, 0.1 mol of $MgCl_2 \times 3$ EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20°C. At this temperature, 0.02 mol of dioctylphthalate (DOP) was added to the slurry. After the addition of the phthalate, the temperature was raised to 135°C during 90 minutes and the slurry was allowed to stand for 60 minutes. Then, another 300 ml of $TiCl_4$ was added and the temperature was kept at 135°C for 120 minutes. After this, the catalyst was filtered from the liquid and washed six times with 300 ml heptane at 80°C. Then, the solid catalyst component was filtered and dried.

Catalyst and its preparation concept is described in general e.g. in patent publications EP 491566, EP 591224 and EP 586390.

The catalyst was further modified (VCH modification of the catalyst).

35 ml of mineral oil (Paraffinum Liquidum PL68) was added to a 125 ml stainless steel reactor followed by 0.82 g of triethyl aluminium (TEAL) and 0.33 g of dicyclopentyl dimethoxy silane (donor D) under inert conditions at room temperature. After 10 minutes 5.0 g of the catalyst prepared above (Ti content 1.4 wt.-%) was added and after additionally 20 minutes 5.0 g of vinylcyclohexane (VCH) was added. The temperature was increased to 60 °C during 30 minutes and was kept there for 20 hours. Finally, the temperature was decreased to 20 °C and the concentration of unreacted VCH in the oil/catalyst mixture was analysed and was found to be 200 ppm weight.

### Preparation of the heterophasic propylene copolymers (HECO 1-3)

The heterophasic propylene copolymers (HECO1-3) were prepared in a sequential process comprising a loop (bulk) reactor and two gas phase reactors. The reaction conditions are summarized in Table 1.

**Table 1:** Preparation of the heterophasic propylene copolymers (HECO1-3)

| | | **HECO1** | **HECO2** | **HECO3** |
|---|---|---|---|---|
| **Prepoly** | | | | |
| TEAL/Ti | [g/t(C3)] | 120 | 120 | 120 |
| Donor | [g/t(C3)] | 35 | 40 | 45 |
| Temperature | [°C] | 30 | 30 | 30 |
| Pressure | [kPa] | 550 | 5500 | 5500 |
| **Loop (Bulk) (R1)** | | | | |
| Temperature | [°C] | 80 | 80 | 80 |
| Pressure | [kPa] | 5400 | 5400 | 5500 |
| H2/C3 | [mol/kmol] | 19 | 20 | 25 |
| C2/C3 | [mol/kmol] | 0 | 0 | 0 |
| Split | [%] | 44.6 | 47.6 | 46.8 |
| $MFR_2$ | [g/10min] | 40 | 70 | 70 |
| XCS | [wt.-%] | 1.5 | 1.5 | 1.5 |
| C2 (calc) | [wt.-%] | 0 | 0 | 0 |
| **1$^{st}$ GPR (R2)** | | | | |
| Temperature | [°C] | 85 | 85 | 85 |
| Pressure | [kPa] | 2100 | 2100 | 2150 |
| H2/C3 | [mol/kmol] | 85 | 65 | 65 |
| C2/C3 | [mol/kmol] | 0 | 0 | 0 |
| Split | [%] | 36.4 | 38.9 | 38.2 |
| $MFR_2$ | [g/10min] | 40 | 38 | 34 |

(continued)

| **1st GPR (R2)** | | | | |
|---|---|---|---|---|
| $MFR_2$ (R2) | [g/10min] | 40 | 40 | 41 |
| XCS | [wt.-%] | 1.5 | 1.5 | 1.0 |
| C2 (calc) | [wt.-%] | 0 | 0 | 0 |
| C2 (R2) (calc) | [wt.-%] | 0 | 0 | 0 |
| **2nd GPR (R3)** | | | | |
| Temperature | [°C] | 80 | 80 | 75 |
| Pressure | [kPa] | 1850 | 1850 | 1850 |
| H2/C3 | [mol/kmol] | 90 | 90 | 90 |
| C2/C3 | [mol/kmol] | 450 | 450 | 500 |
| Split | [%] | 19.0 | 13.5 | 15.0 |
| MFR final | [g/10min] | 20 | 20 | 18 |
| C2 final | [mol%] | 7.0 | 5.0 | 6.2 |
| XCS final | [wt%] | 18.0 | 13.5 | 15.0 |
| C2 (XCS) final | [mol%] | 34 | 37 | 40 |
| IV (XCS) final | [dl/g] | 3.0 | 3.1 | 3.1 |

**B. Preparation of the polypropylene compositions**

The heterophasic propylene copolymers were compounded with different additives and nucleating agents to obtain the polypropylene compositions of inventive example IE1, reference examples RE1 and RE2 and comparative examples CE1. For the polypropylene composition of reference example RE2 additionally a linear low density polyethylene has been compounded as impact booster. The compositions of CE1, RE1, RE2 and IE2 are listed in Table 2.

**Table 2:** Compositions of examples CE1, RE1, RE2 and IE2

| | | CE1 | RE1 | RE2 | IE1 |
|---|---|---|---|---|---|
| HECO1 | [wt.-%] | 98.85 | - | - | - |
| HECO2 | [wt.-%] | - | 92.90 | - | - |
| HECO3 | [wt.-%] | - | - | 98.93 | 99.625 |
| LLDPE | [wt.-%] | - | 5.00 | - | - |
| CaSt | [wt.-%] | 0.05 | 0.05 | 0.05 | - |
| AO1 | [wt.-%] | 0.035 | 0.035 | 0.035 | 0.035 |
| AO2 | [wt.-%] | 0.065 | 0.065 | 0.065 | 0.065 |
| AS | [wt.-%] | 0.30 | 0.35 | 0.225 | 0.225 |
| NU1 | [wt.-%] | - | - | - | 0.05 |

(continued)

| | | CE1 | RE1 | RE2 | IE1 |
|---|---|---|---|---|---|
| Talc | [wt.-%] | 0.70 | 1.60 | 0.70 | - |

| | |
|---|---|
| LLDPE | is the commercial ethylene-butene copolymer FB2230 by Borouge having a butene content of 4.36 mol.-%, a melt flow rate $MFR_5$ (190 °C, 5.0 kg) of 0.95 g/10 min and a density of 922.5 kg/$m^3$ |
| CaSt | calcium stearate, CAS No. 1592-23-0 |
| AO1 | pentaerythritol tetrakis(3-(3,5-di-tert-butyl-4-hydroxyphenyl)propionate), CAS. No. 6683-19-8, commercially available as Irganox 1010 by BASF SE |
| AO2 | tris (2,4-di-tert. butyl phenyl) phosphite, CAS No. 31570-04-4, commercially available as Irgafos 168 by BASF SE |
| AS | glycerol monstearate, CAS No. 31566-31-1 |
| NU1 | Mg-Al hydrotalcite, CAS No. 11097-59-9, commercially available as Setogem RD by Kitsuma Chemicals BV |
| Talc | commercial Talc 3.3 by Imi Fabi S.p.A. or Talc Luzenac A20C by Imerys |

The properties of the polypropylene compositions of examples CE1, RE1, RE2 and IE2 are listed in Table 3.

Table 3: Properties of examples CE1, RE1, RE2 and IE2

| | | CE1 | RE1 | RE2 | IE1 |
|---|---|---|---|---|---|
| $MFR_2$ | [g/10 min] | 18.9 | 18.8 | 19.8 | 18.0 |
| Flexural modulus | [MPa] | 1420 | 1550 | 1570 | 1590 |
| Charpy NIS, 23°C | [kJ/$m^2$] | 8.7 | 9.6 | 9.8 | 9.4 |
| Charpy NIS, -20°C | [kJ/$m^2$] | 4.4 | 4.8 | 5.6 | 5.8 |

It can be seen that the polypropylene compositions comprising HECO3 (RE2 and IE1) show an improved stiffness and impact strength (higher flexural modulus and higher Charpy NIS at 23°C and -20°C) at comparable processability ($MFR_2$) compared to the polypropylene composition of CE1 comprising HECO1.

Further, the polypropylene compositions comprising HECO3 (RE2 and IE1) show an improved impact strength at low temperatures (higher Charpy NIS at -20°C) at comparable processability, stiffness and impact strength at room temperature ($MFR_2$, flexural modulus, Charpy NIS at 23°C) compared to the polypropylene composition of RE1 comprising HECO2 and LLDPE as impact booster.

The poylpropylene composition of example IE1 shows that when using a nucleating agent comprising hydrotalcite, potentially harmful additivation like talc (and also lubricants like calcium stearate) can be avoided and a comparable balance of properties in regard of stiffness, impact strength and processability is obtained.

## Claims

**1.** A polypropylene composition comprising

(A) from 95.000 to 99.999 wt.-%, preferably from 97.500 to 99.995 wt.-%, more preferably from 99.000 to 99.990 wt.-%, based on the overall weight of the polypropylene composition, of a heterophasic propylene copolymer, which has

- a xylene cold soluble (XCS) fraction content of from 10.0 to 20.0 wt.-%, preferably from 12.5 to 18.5 wt.-%, more preferably from 14.0 to 17.5 wt.-%, based on the overall weight of the heterophasic propylene copolymer (A), and

• a comonomer content, preferably an ethylene content, in the XCS fraction of from 25.0 to 50.0 wt.-%, preferably from 30.0 to 45.0 wt.-%, more preferably from 32.5 to 42.5 wt.-%, based on the overall weight of the XCS fraction, determined by quantitative $^{13}C\{^1H\}$ NMR spectroscopy, and

(B) from 0.0001 to 1.0000 wt.-%, preferably from 0.0005 to 0.5000 wt.-%, more preferably from 0.0010 to 0.1000 wt.-%, based on the overall weight of the polypropylene composition, of a nucleating agent comprising particles comprising hydrotalcite,

wherein the polypropylene composition has an $MFR_2$ of from 10.0 to 50.0 g/10 min, preferably from 12.5 to 40.0 g/10 min, more preferably from 15 to 30.0 g/10 min, determined according to ISO 1133 at 230°C and 2.16 kg,
**characterized in that** the amount of talc in the polypropylene composition is less than 0.50 wt.-%, such as in the range of from 0.00 to 0.25 wt.-%, preferably from 0.00 to 0.15 wt.-%, more preferably from 0.00 to 0.05 wt.-%, based on the overall weight of the polypropylene composition, most preferably the polypropylene composition is free of talc.

**2.** The polypropylene composition according to claim 1, wherein the nucleating agent comprises multi-layered particles, which comprise at least one layer, preferably an inner layer, comprising hydrotalcite.

**3.** The polypropylene composition according to claim 2, wherein the multi-layered particles further comprise at least one layer, preferably an outer layer, comprising an organic acid derivative or salts thereof, preferably an organic acid or salts thereof, which is selected from di-carboxy-$C_{1-12}$ alkyl, bis $C_{1-12}$ alkyl phosphonate, N-substituted isocyanurate, mono-, di- or tri-carboxy-$C_{3-3}$ cycloalkane, and organic acid according to formula (I)

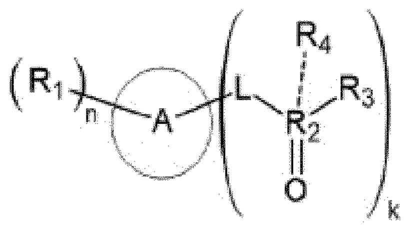

(I)

wherein

k is an integer from 1 to 3;
n is an integer from 0 to 5;
A represents a cycloalkyl, aryl or heteroaryl;
L represents a direct bond or NH;
$R_1$ is one or more independently selected from hydroxyl, carboxyl, $C_{1-6}$ alkoxycarbonyl, arylcarbonylamino, amino, amide, $C_{1-6}$ alkyl, hydroxyphosphoryl, Het, or Ar;
Ar represents an aryl;
Het represents heterocycle;
$R_2$ represents C or P or S;
wherein $R_3$ is hydroxyl and present when L represents a direct bond, or wherein $R_3$ is hydroxyl or $C_{1-6}$ alkyl, when L represents NH; and
wherein $R_4$ is hydroxyl or $C_{1-6}$ alkylcarbonyl and present when $R_2$ represents P, or
wherein $R_4$ is a double bonded oxygen and present when $R_2$ represents S.

**4.** The polypropylene composition according to any one of the preceding claims, wherein the hydrotalcite is a synthetic hydrotalcite.

**5.** The polypropylene composition according to any one of the preceding claims, wherein the particles comprising hydrotalcite has one or more or all of the following properties:

• a molar ratio of MgO to $Al_2O_3$ of from 2.5 to 7.5, preferably from 3.0 to 6.5, more preferably from 3.3 to 5.0;
• a specific surface area of from 10 to 30 $m^2/g$, preferably from 12 to 28 $m^2/g$, more preferably from 15 to 25 $m^2/g$;

• an average secondary particle size of from 0.1 to 1.0 μm, preferably from 0.2 to 0.9 μm, more preferably from 0.3 to 0.8 μm.

**6.** The polypropylene composition according to any one of the preceding claims, wherein the nucleating agent further comprises an alpha-nuceating agent selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3-trideoxy-4,6:5,7-bis-O-[(4- propylphenyl)methylene]-nonitol, vinylcycloalkane polymer, vinylalkane polymer, and mixtures thereof, preferably a vinyl cycloalkane polymer, more preferably a vinyl cyclohexane (VCH) polymer.

**7.** The polypropylene composition according to any one of the preceding claims further comprising from 0.050 to 0.300 wt.-%, preferably from 0.100 to 0.275 wt.-%, more preferably from 0.150 to 0.250 wt.-%, based on the overall weight of the polypropylene composition of an acid scavenger (C), which comprises glycerol monostearate, wherein the polypropylene composition preferably does not comprise calcium stearate.

**8.** The polypropylene composition according to any one of the preceding claims, wherein the heterophasic propylene copolymer (A) has a total comonomer content, preferably total ethylene content, of from 5.0 to 10.0 wt.-%, preferably from 5.3 to 9.0 wt.-%, more preferably from 5.5 to 8.0 wt.-%, based on the overall weight of the heterophasic propylene copolymer (A) and determined by quantitative $^{13}C\{^{1}H\}$ NMR spectroscopy, and/or the XCS fraction of the heterophasic propylene copolymer has an intrinsic viscosity IV of from 2.50 to 4.00 dl/g, preferably from 2.75 to 3.75 dl/g, more preferably from 3.00 to 3.50 dl/g, determined according to DIN ISO 1628/1, October 1999 in decalin at 135°C.

**9.** The polypropylene composition according to any one of the preceding claims, which does not comprise a polyethylene component.

**10.** The polypropylene composition according to any one of the preceding claims having one or more or all of the following properties:

• a flexural modulus of from 1400 to 1800 MPa, preferably from 1450 to 1750 MPa, more preferably from 1500 to 1700 MPa, determined according to ISO 178 on injection molded specimens of 80 × 10 × 4 mm prepared in accordance with ISO 294-1:1996;
• a Charpy notched impact strength at 23°C of from 7.0 to 15.0 kJ/m$^2$, preferably from 7.5 to 12.5 kJ/m$^2$, more preferably from 8.0 to 11.0 kJ/m$^2$, determined according to to ISO 179-1 eA at +23 °C on injection moulded specimens of 80 × 10 × 4 mm prepared according to EN ISO 1873-2;
• a Charpy notched impact strength at -20°C of from 4.5 to 10.0 kJ/m$^2$, preferably from 4.8 to 8.5 kJ/m$^2$, more preferably from 5.0 to 7.5 kJ/m$^2$, determined according to to ISO 179-1 eA at -20 °C on injection moulded specimens of 80 × 10x4 mm prepared according to EN ISO 1873-2.

**11.** A process for producing the polypropylene composition according to any one of the preceding claims comprising the steps of

a) Polymerizing in a first polymerization stage propylene monomers in the presence of a Ziegler-Natta catalyst system and obtaining first polymerization mixture comprising the Ziegler Natta catalyst system and a first propylene homopolymer component having a melt flow rate $MFR_2$ of from 50 to 100 g/10 min, preferably from 55 to 90 g/10 min, more preferably from 60 to 75 g/10 min, determined according to ISO 1133 at 2.16 kg and 230°C;
b) Transferring the first polymerization mixture from the first polymerization stage to a second polymerization stage;
c) Polymerizing in the second polymerization stage propylene monomers in the presence of the first polymerization mixture and obtaining second polymerization mixture comprising the Ziegler Natta catalyst system, the first propylene homopolymer component and a second propylene homopolymer component, which has a melt flow rate $MFR_2$ of from 25 to 75 g/10 min, preferably from 30 to 60 g/10 min, more preferably from 35 to 50 g/10 min, determined according to ISO 1133 at 2.16 kg and 230°C;
d) Transferring the second polymerization mixture from the second polymerization stage to a third polymerization stage;
e) Polymerizing in the third polymerization stage propylene monomers and alpha-olefin comonomers, preferably ethylene comonomers, in the presence of the second polymerization mixture and obtaining third polymerization mixture comprising the Ziegler Natta catalyst system, the first propylene homopolymer component, the second

propylene homopolymer component, and a third propylene-alpha-olefin copolymer component, preferably a third propylene-ethylene copolymer component;
f) Removing the third polymerization mixture from the third polymerization stage and obtaining the heterophasic propylene copolymer (A);
g) Compounding the heterophasic propylene copolymer (A) with the particles comprising hydrotalcite to obtain the polypropylene composition.

**12.** The process according to claim 11, wherein the Ziegler-Natta catalyst system comprises a solid catalyst component comprising a magnesium halide, a titanium halide and an internal electron donor and a cocatalyst, which has been modified by polymerizing a vinyl cycloalkane compound, preferably vinyl cyclohexane (VCH).

**13.** The process according to claims 11 or 12, wherein the Ziegler-Natta catalyst system comprises as component (i) a Ziegler-Natta procatalyst which contains a trans-esterification product of a lower alcohol and a phthalic ester, which is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

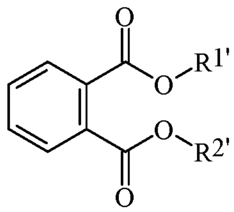
(I)

wherein $R^{1'}$ and $R^{2'}$ are independently at least a $C_5$ alkyl under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$,

an organometallic cocatalyst as component (ii), which is selected from the group consisting of trialkylaluminium, like triethylaluminium (TEA), dialkyl aluminium chloride and alkyl aluminium sesquichloride, and an external donor as component (iii) represented by formula (IIIa) or (IIIb), wherein formula (IIIa) is defined by

$$Si(OCH_3)_2R_2^5 \quad \text{(IIIa)}$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms, and
formula (IIIb) is defined by

$$Si(OCH_2CH_3)_3(NR^xR^y) \quad \text{(IIIb)}$$

wherein $R^x$ and $R^y$ can be the same or different a represent a hydrocarbon group having 1 to 12 carbon atoms.

**14.** An article comprising the polypropylene composition according to any one of the preceding claims, preferably in an amount of from 90 to 100 wt.-%, more preferably from 95 to 100 wt.-%, based on the overall weight of the article, wherein the article preferably is an injection moulded article, more preferably a thin-walled injection moulded article, preferably selected from pallets and pails.

**15.** Use of the polypropylene composition according to any one of claims 1 to 13 for the production of an article, preferably an injection moulded article, with an amount of talc of less than 0.50 wt.-%, such as in the range of from 0.00 to 0.25 wt.-%, preferably from 0.00 to 0.15 wt.-%, more preferably from 0.00 to 0.10 wt.-%, based on the overall weight of the article, more preferably a talc-free article, preferably a talc-free injection moulded article.

Europäisches Patentamt
European Patent Office
Office européen des brevets

# PARTIAL EUROPEAN SEARCH REPORT

under Rule 62a and/or 63 of the European Patent Convention. This report shall be considered, for the purposes of subsequent proceedings, as the European search report

Application Number
EP 24 18 4689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 115 276 B2 (BRANDSTETTER FRANZ [AT]; MAUREDER KLAUS [AT] ET AL.) 25 August 2015 (2015-08-25) * example Polymer 3 * ----- | 1-15 | INV. C08L23/10 |
| X | US 2013/253124 A1 (BERNREITER KLAUS [AT] ET AL) 26 September 2013 (2013-09-26) * example CE3 * ----- | 1-15 | |

TECHNICAL FIELDS SEARCHED (IPC)

C08F
C08L

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

1

| Place of search | Date of completion of the search | Examiner |
|---|---|---|
| Munich | 19 February 2025 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04E07)

Europäisches Patentamt
European Patent Office
Office européen des brevets

# INCOMPLETE SEARCH SHEET C

Application Number
EP 24 18 4689

Claim(s) completely searchable:
-

Claim(s) searched incompletely:
1-15

Reason for the limitation of the search:

The search has been restricted to the subject-matter indicated by the applicant in his letter of 14.02.2025 filed in reply to the invitation pursuant to Rule 63(1) EPC.
The objections made in the clarification request were the following :
"The amount of nucleating agent comprising particles comprising hydrotalcite is given in claim 1.
However,
- the amount of hydrotalcite in the particles is not given, neither in the claims nor in the description
- the amount of particles in the nucleating agent is not given in the claims nor in the description.
It means that the amount of hydrotalcite in the polypropylene composition, an essential feature, is unknown.
It follows that the person skilled in the art does not know without undue burden how much hydrotalcite must be present in the composition to solve the problem (lower and upper range).
Moreover, support and disclosure within the meaning of Articles 84 and 83 EPC are to be found only for the commercial hydrotalcite containing product "Setogem RD" used in the example.
The applicant is advised that the registered trade mark "Setogem RD" cannot be introduced in the claims since it has no precise meaning as it is not internationally accepted as a standard descriptive term, thereby it would render the definition of the subject-matter of those claims unclear (Article 84 EPC; see EPC Guidelines F-IV, 4.8).
Therefore, a search simply limited to the example disclosed in the description seems also meaningless.
Remark : the amount of particles in the nucleating agent is not given, it is however noted that the disclosure on p.15, last paragraph, discloses an embodiment with the amount of particles in the propylene composition.
Nevertheless, as the amount of hydrotalcite in the particles is not given, the objections under Art. 83 and 84 can still not be overcome using said disclosure."
The applicant has replied bona fide to the objection by doing the only possible amendment restricting the claimed matter in a sensible way.
The search has been carried out on the subject matter proposed by the applicant in the letter dated 14.02.2025.
However, the objection that the total amount of hydrotalcite is not given (and not derivable fom either the claims or the description) is still maintained, with the consequence that the present application does not comply with any of Art. 84,83 and 56 EPC.
The amendment in the wording of claim 2 does not change anything since it is an option ("preferably").

## ANNEX TO THE EUROPEAN SEARCH REPORT ON EUROPEAN PATENT APPLICATION NO. EP 24 18 4689

This annex lists the patent family members relating to the patent documents cited in the above-mentioned European search report. The members are as contained in the European Patent Office EDP file on
The European Patent Office is in no way liable for these particulars which are merely given for the purpose of information.

19-02-2025

| Patent document cited in search report | Publication date | Patent family member(s) | Publication date |
|---|---|---|---|
| US 9115276 B2 | 25-08-2015 | BR PI0915663 A2 | 27-08-2019 |
| | | CN 102089370 A | 08-06-2011 |
| | | EP 2300523 A1 | 30-03-2011 |
| | | RU 2011100096 A | 20-08-2012 |
| | | US 2011136959 A1 | 09-06-2011 |
| | | WO 2010006999 A1 | 21-01-2010 |
| US 2013253124 A1 | 26-09-2013 | CN 102947385 A | 27-02-2013 |
| | | EP 2397517 A1 | 21-12-2011 |
| | | US 2013253124 A1 | 26-09-2013 |
| | | WO 2011157734 A1 | 22-12-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020053164 A
- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A
- EP 491566 A
- EP 591224 A
- EP 586390 A


### Non-patent literature cited in the description


- **HANS ZWEIFEL**. Plastic Additives Handbook. 2009, 1141-1190
- **SINGH, G.** ; **KOTHARI, A.** ; **GUPTA, V.** *Polymer Testing*, 2009, vol. 28 (5), 475
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun*, 2007, vol. 28, 1128
- **CHENG, H. N.** *Macromolecules*, 1984, vol. 17, 1950
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **KAKUGO, M.** ; **NAITO, Y.** ; **MIZUNUMA, K.** ; **MIYATAKE, T.** *Macromolecules*, 1982, vol. 15, 1150
- *CHEMICAL ABSTRACTS*, 1592-23-0
- *CHEMICAL ABSTRACTS*, 6683-19-8
- *CHEMICAL ABSTRACTS*, 31570-04-4
- *CHEMICAL ABSTRACTS*, 31566-31-1
- *CHEMICAL ABSTRACTS*, 11097-59-9